# EUROPEAN PATENT APPLICATION

(11) **EP 2 053 374 A2**
(43) Date of publication of application: **29.04.2009**
(21) Application number: 08166353.6
(22) Date of filing: 10.10.2008
(51) Int. Cl.: G01L 9/16

(54) **Magnetostrictive sensor with uniform stress**

(30) Priority: 24.10.2007 US 977306
(71) Applicant: Delphi Technologies, Inc., Troy, Michigan 48007 (US)
(72) Inventor: Schroeder, Thaddeus, Rochester Hills, MI 48309 (US); Taye, Elias, Macomb Twp, MI 48042 (US); Thrush, Christopher M., Shelby Township, Macomb County, MI 48316 (US); Lequesne, Bruno, Troy, MI 48084 (US)
(74) Representative: Denton, Michael John

(57) **Abstract**

In one embodiment, a sensor assembly has a sensor housing forming a fluid chamber (28) having a surface (21) defining a normal axis. A magnetostrictive (MS) core (18, 38) that defines a central longitudinal axis is subjected to stress induced by pressurized fluid in the chamber. An excitation coil (22, 40) is coupled to the core (18, 38) to induce a magnetic flux therein. The central longitudinal axis of the core (18, 38) is coaxial with the axis normal to the fluid chamber surface (21).

## Description

### TECHNICAL FIELD

The present invention relates generally to magnetostrictive (MS) stress sensors.

### BACKGROUND OF THE INVENTION

Magnetostrictive stress sensors can be used to measure stress such as might be generated within the sensor by fluid pressure. Typically, a MS stress sensor includes a magnetostrictive (MS) core made of a material, such as a nickel 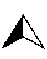 iron alloy, and a coil that surrounds the core for establishing magnetic flux within the core. The flux loop continues through the medium on the exterior of the coil. The core provides a primary path for the magnetic flux in a first portion of the of magnetic flux loop. A ferromagnetic carrier, either MS or non-MS, can be used to provide an improved return path for the magnetic flux in a second portion of the magnetic flux loop, as the magnetic flux circles the coil through the core and the carrier. The permeability ofthe MS core, and thus the inductance of the coil, is a function of the stress applied to the core along the axis. The value of the coil inductance therefore represents the magnitude of the stress applied to the core and, hence, the magnitude of the physical phenomenon causing the stress, such as fluid pressure on the core.

As understood herein, the stress within the MS core optimally should be uniform in the area of the core where stress is to be measured in order to optimize its measurement.

### SUMMARY OF THE INVENTION

A sensor assembly includes a sensor housing forming a fluid chamber that in turn defines a surface, with an axis normal to the surface. A magnetostrictive core is provided that defines a central longitudinal axis. The core is subjected to stress induced by pressurized fluid in the chamber. An excitation coil surrounds the core to induce a magnetic flux therein. The central longitudinal axis of the core is coaxial with the axis normal to the fluid chamber surface.

In some embodiments the MS core may include a designated portion around which the coil is wound. This coil portion of the core defines the central longitudinal axis and can have a circular cross-section or a rectangular cross-section. In other embodiments, the core can be "H"-shaped and the central longitudinal axis extends through the centers of the cross-members connecting the two core leg members rendering them equidistant from the central longitudinal axis. In non-limiting examples the coil portion of the core undergoes only compressive stress during operation.

In another aspect, a sensor assembly includes a sensor housing forming a fluid chamber and a magnetostrictive core portion subjected to one and only one type of stress due to a force generated by pressurized fluid in the chamber. An excitation coil wound only around the coil portion of the core induces a magnetic flux therein.

In still another aspect, a sensor is disclosed for outputting a signal representative of stress caused by a source of stress. The sensor includes magnetostrictive (MS) means defining a central longitudinal axis and juxtaposable with the source of stress such that the source of stress causes one and only one type of stress along the central longitudinal axis of the MS means. The sensor further includes signal means configured for carrying a signal representative of the one and only one type of stress along the central longitudinal axis of the MS means.

The details of the present invention, both as to its structure and operation, can best be understood in reference to the accompanying drawings, in which like reference numerals refer to like parts, and in which:

### DESCRIPTION OF THE DRAWINGS

Figure 1 shows a system in accordance with one non-limiting embodiment of the present invention;

Figure 2 is a perspective view of a first embodiment of a MS core;

Figure 3 is a cut-away perspective view of the core shown in Figure 2 in a sensor housing, with the coil and housing cover removed for clarity;

Figure 4 is a partial cross-sectional view of an alternate sensor core in a sensor housing, and

Figure 5 is a side view of the core and housing shown in Figure 4.

### DESCRIPTION OF THE PREFERRED EMBODIMENT

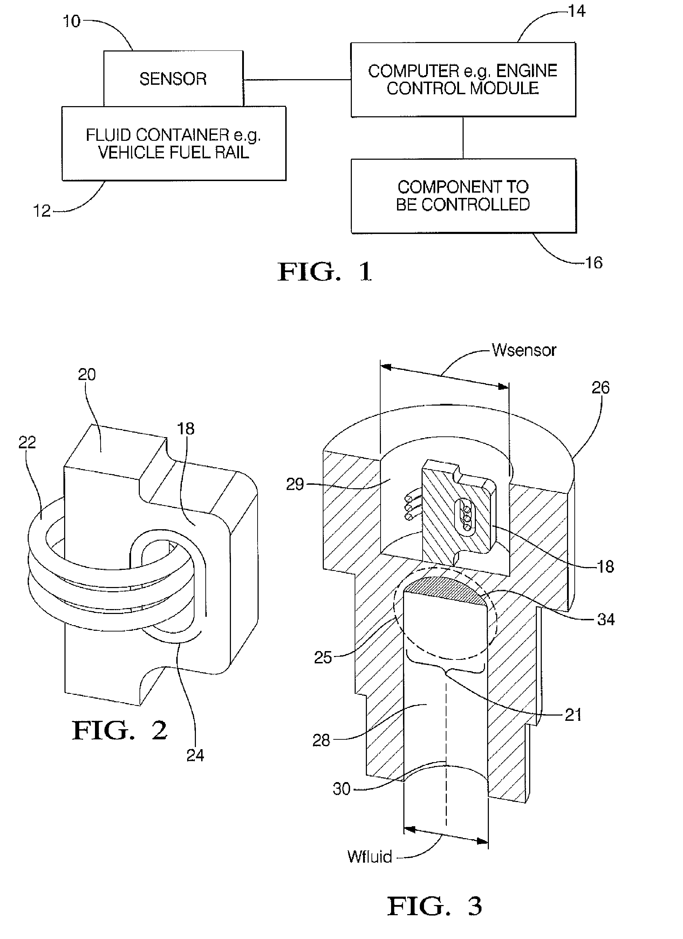

Beginning with Figure 1, a general, non-limiting implementation of an MS stress sensor 10 is shown. The MS stress sensor 10 can be coupled to a source of pressure, such as to a fluid container 12, with the MS stress sensor 10 having the ability to sense fluid pressure in the fluid container 12 in accordance with principles below. Without limitation, the fluid contain 12 may be, e.g., a vehicle fuel rail, an engine combustion chamber, etc., although present principles are not limited to any particular fluid application.

The MS stress sensor 10 is also electronically connected to a computer 14 which may be, without limitation, an engine control module. The computer 14 receives the signal that is output by the sensor 10 for processing the signal to, e.g., correlate the stress as indicated by the signal to a fluid pressure. Further, the computer 14 may be electronically connected to a component or components 16 such as a fluid pump, injectors, etc., that may be controlled by the computer 14 based on data received from the MS stress sensor 10.

A first embodiment of the MS stress sensor 10 is shown in Figures 2 and 3. Beginning with Figure 2, an MS core 18 is shown. In this first non-limiting embodiment, the body 20 of the core 18 is parallelepiped in shape, but may also be cylindrical in shape to retain a greater degree of symmetry and so that high-stress areas do not occur near the corners of a parallelepiped-shaped core.

Continuing with Figure 2, an excitation coil 22 is coupled to the core 18. More specifically, the coil 22 is of a non-magnetic wire, such as e.g. copper, that is wound around core 18. The coil 22 is energized to induce a magnetic flux 24 in the MS core 18, and also serves as a transducer providing a signal representing the resulting magnetic flux, which in turn represents the stress of the MS core 18 and, hence, the pressure in the fluid. As shown, the magnetic flux 24 loops around the MS core 18. As is known in the science of magnetism, the coil can be wound anywhere around the core; it is shown by way of example in Fig. 2 wound around the body region 20 of the core 18. Also, a single coil 22 is shown in Fig. 2, although several coils can be contemplated for redundancy, temperature compensation, etc.

Figure 3 provides another view of the first embodiment of the MS stress sensor 10, this time representing a cross-section of the MS core 18 shown disposed within a sensor housing 26. As shown in Fig. 3, the sensor housing comprises two cavities or chambers, a chamber 28 designed to receive the fluid under pressure, and a chamber 29 designed to receive the sensor unit (core 18 and coil 22). In this example, chambers 28 and 29 have a width Wfluid and Wsensor, respectively, in the plane of the figure (width, or diameter, or length, depending on respective chamber shapes). There is no restrictions on the size of Wfluid and Wsensor. One or both could be large;, alternatively, one or both could be very small, for instance if the fluid chamber 28 is a narrow conduit designed to be connected to a relatively distant pressure chamber (such a design may be necessary for instance to isolate the sensing element from extreme temperatures).

In any event, there is an area designated 25 separating the fluid chamber 28 from the sensor chamber 29 , which transmits the stress from the fluid to the sensor. This part 25 of the sensor housing 26 is where the two chamber areas (widths Wfluid and Wsensor in the plane of the figure) overlap. This part 25 of the sensor housing 26 is also where the housing 26 is at its thinnest, so that the transmitted stress is maximized. The minimum thickness is limited by material strength and the maximum anticipated stress or burst pressure, which could be much larger than the maximum for normal operation. Thicknesses on the order of a fraction of a millimeter to a couple of millimeters are the most common. Further, a point of maximum stress 34 is shown. This point of maximum stress 34 is typically located approximately in the geometric center of area 25.

The area 25 of the sensor housing 26 includes a surface 21 on which the fluid under pressure applies stress. The surface 21 defines a direction normal to itself, and more specifically an axis 30 normal to surface 21 and located at the approximate geometric center of area 25, i.e. at or close to point 34 where the stress is maximum. Further, the MS core 18 defines a central longitudinal axis 32 that is coaxial with the axis 30 normal to surface 21. The stress caused by the fluid pressure travels through the point of maximum stress 34, along the axis 32, and transfers to the body 20 of the core 18. In the presence of stress, the magnetic permeability of the body 20 of the core 18 changes affecting the inductance of the coil. To achieve better performance and accuracy from the sensor 10, stress may be applied to the body 20 of the core 18, but the rest of the core 18 is essentially not stressed. The rest of the core 18 is not stressed because the axis 32 extending through the body 20, i.e. the axis 32 ofthe core 18 region around which the coil 22 is wound, is collinear with the axis 30 normal to the surface 21 of the fluid chamber 28, causing stress to be transferred substantially only along the axes.

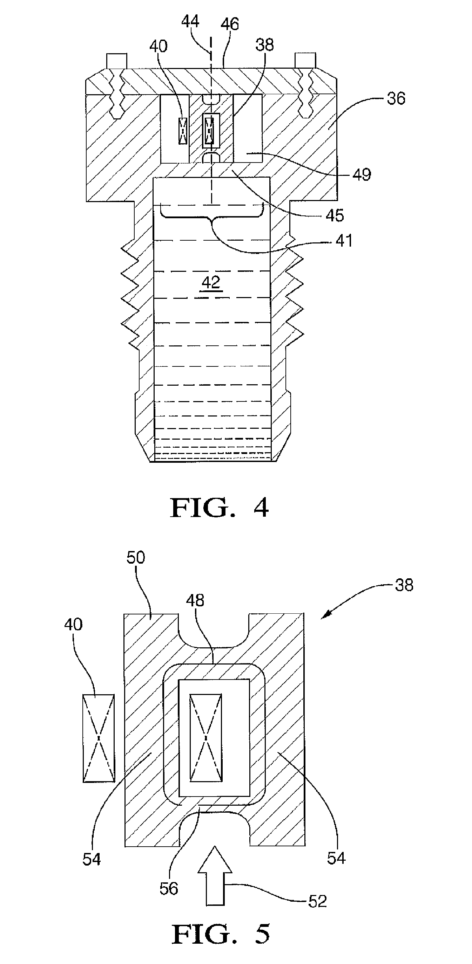

A second embodiment ofthe MS stress sensor 10 is shown in Figures 4 and 5. Beginning with Figure 4, a sensor housing 36 is shown, which is substantially similar to the sensor housing 26 from the first embodiment above, with the following exceptions. Distinguishing from the first embodiment, a MS core 38 upon which the coil 40 is wound is "H"-shaped in the second embodiment. That is, the MS core 38 includes two leg members 50 connected by cross-members 48. The cross-members 48 are located at some distance from the top and bottom of the leg members 50. Moreover, the MS core 38 defines a central longitudinal axis 44.

As shown in Figures 4 and 5, the sensor housing 36 defines a fluid chamber 42, a sensor chamber 49, and includes an area 45 where these two chambers 42 and 49 overlap. Further, the area 45 has a surface 41 separating area 45 and fluid chamber 42. In turn, this surface 41 defines an axis 46 normal to surface 41 and located approximately where the stress within area 45 is maximum. This axis 46 is coaxial with the central longitudinal axis 44 of the MS core 38. Specifically, as can be appreciated in cross-reference to Figures 4 and 5, the axis 46 normal to the surface 41 of the fluid chamber 42 extends through the center of upper and lower cross-members 48 each of which connects the two leg members 50 of the MS core 38. The leg members 50 are equidistant from the central longitudinal axis 44 and are perpendicular to the cross-members 48. The coil 40 is shown wound around one of the leg members 50 between the cross-members 48, although coil 40 could also be wound around one of the two cross-members 48 between the leg members 50.

The H-shaped MS core 38 is shown in greater detail in Figure 5. Figure 5 shows a pressure action arrow 52, representing fluid pressure from the fluid chamber 42. The pressure action arrow 52 indicates the direction of the force caused by the fluid pressure, the fluid pressure being caused by fluid in the fluid chamber 42. Further, magnetic flux predominantly remains in the inner area of the core 38 as indicated by the vertical hatched areas 54 and horizontal hatched areas 56. The area hatched areas may be referred to as a skin effect area.

As long as the cross-members 48 are located at some distance from the top and bottom of the leg members 50, they can be designed to experience essentially no stress. It can therefore be appreciated that stress affecting the core 38 is then confined substantially only to the vertical areas 54, which are under a single, compressive stress. The magnetic flux traverses these areas of uniform stress 54 as well as areas 56 under essentially no stress, resulting in a uniform stress-dependent signal.

While the examples shown herein have assumed compressive stress, hoop stress and tensile stress may be employed in other embodiments.

The materials used for the MS core may include but are not limited to nickel/iron alloys, pure nickel, terfenol, galfenol. Preferred non-limiting materials include maraging steel (steel with about 18% nickel content) and nickel-iron alloys with 30%-70% nickel content.

While the particular MAGNETOSTRICTIVE SENSOR WITH UNIFORM STRESS is herein shown and described in detail, it is to be understood that the subject matter which is encompassed by the present invention is limited only by the claims.

## Claims

1. A sensor assembly, comprising:
a fluid chamber (28) defining a surface (21), said surface (21) defining a normal axis;
a magnetostrictive core (18, 38) defining a central longitudinal axis and subjected to stress induced by fluid in the chamber (28); and
an excitation coil (22, 40) coupled to the core (18, 3 8) to induce a magnetic flux therein, the central longitudinal axis of the core (18, 38) being coaxial with the normal axis of the fluid chamber (28) surface (21).

2. The sensor assembly of Claim 1, wherein the core (18) includes a leg portion (20) the leg portion defining the central longitudinal axis.

3. The sensor assembly of Claim 1, wherein the core (38) is "H"-shaped and the central longitudinal axis extends through the centers of the cross-members connecting two leg members that are equidistant from the central longitudinal axis.

4. The sensor assembly of Claim 2, wherein the leg portion (20) has a circular cross-section or a rectangular cross-section.

5. The sensor assembly of Claim 2, wherein the leg portion is subjected to only compressive stress during operation.

6. A sensor assembly, comprising:
a fluid chamber (28);
a magnetostrictive core (18, 38) having one portion subjected to one and only one type of stress induced by fluid in the chamber; and
an excitation coil (22, 40) wound around the core (18, 38) to induce a magnetic flux therein.

7. The sensor assembly of Claim 6, wherein the fluid chamber (28) defines a surface (21), said surface (21) defining a normal axis and said core (18) portion subjected to one and only one type of stress induced by fluid in the chamber defines a central longitudinal axis parallel to said axis normal to said surface (21) of the fluid chamber (28).

8. The sensor assembly of Claim 6, wherein the fluid chamber (28) defines a surface (21), said surface (21) defining a normal an axis, and the core (18) defines a central longitudinal axis parallel to said axis normal to said surface (21) of the fluid chamber (28), and further wherein the core (18) is "H"-shaped and the central longitudinal axis extends through the cross-members connecting two leg members that are equidistant to the central longitudinal axis.

9. The sensor assembly of Claim 7, wherein said core portion subjected to one and only one type of stress induced by fluid in the chamber has a circular cross-section or a rectangular cross-section.

10. The sensor assembly of Claim 7, wherein said core portion subj ected to one and only one type of stress induced by fluid in the chamber is subjected to only compressive stress during operation.

11. A sensor for outputting a signal representative of stress caused by a source of stress, comprising:
magnetostrictive (MS) means (18, 38) defining a central longitudinal axis and juxtaposable with the source of stress such that the source of stress causes one and only one type of stress along the central longitudinal axis of the MS means; and
signal means (22, 40) configured for carrying a signal representative of the one and only one type of stress along the central longitudinal axis of the MS means.

12. The sensor of Claim 11, wherein the source of stress defines an axis aligned with the central longitudinal axis.

13. The sensor of Claim 11, wherein the MS means (38) is "H"-shaped.

14. The sensor of Claim 11, wherein the one and only one type of stress is compressive stress.
